# EUROPEAN PATENT SPECIFICATION

(11) **EP 0 721 378 B1**
(45) Date of publication and mention of the grant of the patent: **19.04.2000**
(21) Application number: 94929367.4
(22) Date of filing: 27.09.1994
(51) Int. Cl.: B05D 1/02, C09D 7/00, C09D 5/02

(54) **METHODS FOR THE SPRAY APPLICATION OF WATER-BORNE COATINGS WITH COMPRESSED FLUIDS**
VERFAHREN ZUM AUFSPRÜHEN VON WASSERLÖSLICHEN ÜBERZÜGENMIT KOMPRIEMIERTEN FLUIDEN
PROCEDE D'APPLICATION PAR PULVERISATION DE REVETEMENTS AQUEUX A L'AIDE DE FLUIDES COMPRIMES

(30) Priority: 29.09.1993 US 128880
(43) Date of publication of application: 17.07.1996
(73) Proprietor: UNION CARBIDE CHEMICALS & PLASTICS TECHNOLOGY CORPORATION, Danbury, Connecticut 06817-0001 (US)
(72) Inventor: NIELSE, Kenneth, Andrew, Charleston, WV 25303 (US); BUSBY, David, Charles, Charleston, WV 25304 (US); GLANCY, Charles, William, South Charleston, WV 25303 (US); ROSS, Gregory, Charles c/o Air Prod.& Chem. Inc., Allentown 18159-1501 Pennsylvania (US)
(74) Representative: Allard, Susan Joyce
(86) International application number: PCT/US94/10947
(87) International publication number: WO 95/09056

(56) References cited:
- EP-A- 0 068 771
- EP-A- 0 175 849
- EP-A- 0 388 915
- EP-A- 0 388 927
- WO-A-81/02023
- GB-A- 2 028 364
- US-A- 4 384 661
- US-A- 5 178 325

## Description

### FIELD OF THE INVENTION

This invention pertains to methods for the spray application of water-borne coatings by using compressed fluids, such as carbon dioxide or ethane, to enhance atomization and spray formation at lower water levels and higher viscosities.

### BACKGROUND OF THE INVENTION

Many spray coating compositions contain viscous or solid polymeric components, such as coatings, adhesives, release agents, gel coats, lubricants, and agricultural materials. Large amounts of organic solvents have been used to perform a variety of functions, such as to dissolve the polymers; to reduce viscosity for spraying; to provide a carrier medium for dispersions; and to give proper flow when the composition is sprayed onto a substrate, such as coalescence and leveling to form a smooth coherent coating film. However, the solvents released by the spray operation are a major source of air pollution.
Recently, Union Carbide Corporation has comercialized a spray technology uses environmentally acceptable supercritical fluids or subcritical compressed fluids, such as carbon dioxide, to replace the solvent fraction in solvent-borne compositions. This technology markedly reduces organic solvent emissions.

Generally, the preferred upper limit of supercritical fluid or compressed fluid addition, such as carbon dioxide, is that which is capable of being miscible with the polymeric coating composition. This practical upper limit is generally recognizable when the admixture containing coating composition and carbon dioxide breaks down from one phase into two fluid phases. Where two phases are formed, the viscosity and droplet size of the liquid spray mixture is increased, the spray pattern deteriorates and the deposited coating material to be too viscous to flow out properly on the substrate.

Water-borne coatings have also been developed, wherein water is used to achieve low atomization viscosity instead of the fast-evaporating organic solvents used in solvent-borne coatings.

EP-A-0068771 discloses water based aerosol compositions in which dimethylether is used as a propellant in an amount of from 5 to 50% by weight.

EP-A-0175849 also discloses water based aerosol compositions in which dimethylether is used as a propellant generally in an amount of from 25 to 50% by weight.

However, water-borne coatings have generally not provided the performance and application properties that were initially expected. Water-borne coatings often have problems with runs and sags occurring in the applied coating. Line speeds on water-borne coating spray lines are often significantly slower than for solvent-borne coatings. Water-borne coatings generally can not be applied under conditions of high relative humidity without serious coating defects. If water evaporates more slowly than the organic cosolvents of the coalescing aid, the loss of the organic cosolvent/coalescing aid can interfere with film formation. Poor gloss, poor uniformity, and pin holes often result.

Therefore, improved processes are sought to enable water-borne coatings to be sprayed at lower water levels and higher viscosities.

### SUMMARY OF THE INVENTION

In accordance with the present invention water-borne coating compositions can be sprayed at reduced water contents and higher viscosities by using compressed fluids thereby giving improved coating quality and higher productivity by decreasing sagging and running, shortening dry times by applying less water, and lowering sensitivity to the relative humidity of the spray booth air.

In its broadest embodiment, the present invention is directed to a process for spraying a water-borne polymeric composition having reduced water content, which comprises:
(1) forming a liquid mixture in a closed system comprising:
   (a) a water-borne polymeric composition containing a solvent fraction having at least about 35 % water by weight and at least one coupling agent for the compressed fluid; and
   (b) at least one compressed fluid which is compatible with or can be made compatible with said water-borne polymeric composition and which is at least in an amount which renders said liquid mixture capable of being sprayed, wherein the compressed fluid is a gas at standard conditions of 0°C and one atmosphere pressure (STP); and
(2) spraying said liquid mixture by passing the mixture under pressure through an orifice to form a liquid spray.

In a preferred embodiment, the water-borne composition contains at least one polymer capable of forming a coating on a substrate, which may be a water-dispersible polymer or a water-soluble polymer.

In another preferred embodiment, the at least one coupling agent for said compressed fluid comprises at least one coupling solvent or at least one coupling polymer.

In still another preferred embodiment, the liquid mixture of water-borne coating composition and compressed fluid contains a finely dispersed liquid compressed fluid phase. The water-borne polymeric composition preferably contains at least one organic solvent that is capable of being extracted from said water-borne polymeric composition into the compressed fluid phase. The liquid mixture may contain at least one organic solvent (c) which is immiscible with said water-borne polymeric composition and which is at least partially miscible with said at least one compressed fluid under pressure.

In yet another preferred embodiment, the at least one compressed fluid is selected from the group consisting of carbon dioxide, nitrous oxide, ethane, ethylene, propane, propylene, butane, and isobutane. The compressed fluid is preferably a supercritical fluid at the temperature and pressure at which the liquid spray mixture is sprayed. The most preferred compressed fluids are carbon dioxide and ethane.

In still yet another preferred embodiment, the process further comprises controlling the pH of said liquid mixture to prevent polymer precipitation when admixing carbon dioxide with the water-borne polymeric composition, thereby making carbon dioxide compatible with water-borne polymeric compositions that are sensitive to acidic pH.

In one more preferred embodiment, the liquid mixture is passed through an elongated orifice to form a liquid spray.

### DETAILED DESCRIPTION OF THE INVENTION

The methods of the inventions are not limited solely to water-borne coating compositions. For example, water-borne polymeric compositions such as adhesives, release agents, additive formulations, agricultural materials, lubricants and the like may also be sprayed by the methods of the present inventions.

As used herein, a "compressed fluid" is a fluid which may be in its gaseous state, its liquid state, or a combination thereof, or is a supercritical fluid, but which is in its gaseous state at standard conditions of 0° C and one atmosphere absolute pressure (STP). A "supercritical fluid" is a fluid that is at a temperature and pressure such that it is at, above, or slightly below its critical point. A "subcritical fluid" is a compressed fluid that is at a temperature and pressure at which it is not a supercritical fluid, whether it be a liquid, a gas, or a gas-liquid mixture. The phrase "water-borne coating composition" is a water-borne coating composition, material, and formulation that has no compressed fluid admixed therewith. A "solvent" includes water and organic solvents that have no compressed fluid admixed therewith and which are in the liquid state at STP. The phrase "nonvolatile materials" means solid materials and liquid materials such as solid polymers, liquid polymers, and other compounds that are nonvolatile at about 25° C. A "coupling agent" is a material that increases the solubility under pressure of the compressed fluid in the water-borne coating compositions.

Compounds which may be used as compressed fluids in the present invention include but are not limited to carbon dioxide, nitrous oxide, xenon, ethane, ethylene, propane, propylene, butane, isobutane, and mixtures thereof. The utility of any of these compressed fluids will depend upon compatibility with the water-borne coating composition used, the temperature and pressure of application, and the inertness and stability of the compressed fluid. Carbon dioxide, ethane, nitrous oxide, and mixtures thereof are preferred compressed fluids in the present invention. Due to relatively low cost, stability, and chemical inertness, ethane is most preferred for water-borne coating compositions that are sensitive to acidic pH. Due to low cost, non-flammability, stability, and wide availability, carbon dioxide is most preferred for water-borne compositions that are not unduly sensitive to acidic pH.

The water-borne coating compositions are generally comprised of a nonvolatile materials fraction which is capable of being sprayed and of forming a coating on a substrate. The water-borne coating compositions, in addition to the nonvolatile materials fraction, also contain a solvent fraction which is typically at least partially miscible with the nonvolatile materials fraction.

The water-borne coating compositions will typically have a nonvolatile materials fraction comprising at least one polymer component that is capable of forming a coating on a substrate, whether such component is a paint, enamel, lacquer, varnish, adhesive, chemical agent, release agent, lubricant, protective oil, an agricultural coating, or the like.

Generally, the nonvolatile materials used in the water-borne coating compositions must be able to withstand the temperatures and pressures used in admixing and spraying with the compressed fluid. Suitable polymers include thermoplastic polymers, thermosetting polymers, crosslinkable film forming systems, two-component reactive polymer systems, and mixtures thereof, typically used in water-borne coating compositions sprayed conventionally with no compressed fluid. The polymers may be solid polymers or liquid polymers and they may be dissolved, dispersed, or emulsified in the solvent fraction.

Exemplary polymers include acrylic polymers, polyesters, polyvinyl resins such as polyvinyl acetate, alkyds, polyurethanes, epoxies, phenolic resins, cellulosic polymers such as methyl cellulose, hydroxyethyl cellulose, carboxymethyl cellulose, and nitrocellulose, amino polymers such as urea formaldehyde and melamine formaldehyde, polyethylene glycols and polypropylene glycols, polyamides, drying oils, natural gums and resins, polymers containing silicon, fluorocarbons and other polymers containing fluorine, and the like.

The nonvolatile materials fraction of the water-borne coating compositions, in addition to the polymers, may contain conventional additives which are typically used in water-borne coatings.

The water-borne coating compositions contain a solvent fraction containing at least about 35, preferably at least about 40, more preferably at least about 50, and most preferably at least about 60 water by weight. In addition to the water, the solvent fraction may contain one or more organic solvents. The organic solvent may perform a variety of functions, such as to solubilize the polymer and other components, to give proper flow characteristics such as leveling, to adjust the drying rate, aid pigment dispersion, and the like. Generally the preferred organic solvents are water soluble, such as alcohols, glycol ethers, acetone, methyl ethyl ketone, and the like, that are typically used in water-borne coating formulations.

In order to derive the benefits of spraying a water-borne coating composition with reduced water content, the water-borne coating composition preferably has a water content that is less than about 95, more preferably less than about 90, still more preferably less than about 80 and most preferably less than about 70, % by weight of the water content used to spray the water-borne composition without compressed fluid.

Preferably, the water-borne coating composition has a viscosity above about 75, more preferably above about 100, still more preferably above about 150, and most preferably above about 200, centipoise at 25° C. Generally, the water-borne coating composition will generally have a viscosity below about 3000, preferably below about 2000, more preferably below about 1500, still more preferably below about 1000, and most preferably below about 700, centipoise at 25° C.

In prior coating compositions that contain a coupling solvent and above about 30 % water by weight, the solubility of supercritical carbon dioxide in the compositions was found to decrease to levels thought to be undesirably low for spray application, that is, below a level that was believed necessary to have sufficient expansive force to obtain a decompressive spray.

This invention provides compressive sprays and fine atomization with much lower levels of compressed fluid than was heretofore believed possible. For example, where an acrylic coating composition (Rohm & Haas Acroloid™ AT-954) having 78 % polymer, a high viscosity of about 2000 centipoise at 25°C, and no water is sprayed with supercritical carbon dioxide at 60° C and 1800 psi (124 bars), a minimum of about 24.5 % carbon dioxide by weight is required to obtain a decompressive spray. The solubility limit is 27.6 % carbon dioxide. However, where the same acrylic composition is sprayed at the same conditions but with ethane being the supercritical compressed fluid, a decompressive spray is obtained at about 9.5 % ethane by weight. A feathered, decompressive spray having fine atomization with an average droplet size of 36 microns is achieved.

If 9.5 % carbon dioxide were used instead of the ethane, sufficient expansive force of the carbon dioxide is not generated for atomization and spray formation.

Obtaining a decompressive spray may also be affected by the nucleation rate at which gaseous compressed fluid is formed in the spray orifice during depressurization. The conditions at which a decompressive spray is formed typically comprise a relatively narrow range of compressed fluid concentration that is just below the solubility limit. As the solubility of the compressed fluid in the spray mixture changes to higher or lower levels, such as due to changing the temperature, pressure, polymer level, etc., the amount of compressed fluid necessary to achieve decompressive spray conditions also changes.

The water contained in the water-borne coating compositions tends to reduce the solubility of the compressed fluid and reduce the viscosity and cohesive forces in the coating compositions that oppose atomization. Hence a decompressive spray can be obtained at low compressed fluid compositions. The water can also aid nucleation of the compressed fluid to form a gas phase during depressurization. Thus, as the water content is reduced, the viscosity of the water-borne coating composition is increased, but the higher compressed fluid solubility enables more compressed fluid to be used to achieve the desired expansive force for atomization.

The coupling agents may comprise coupling solvents useful in conventional water-borne coating compositions, to facilitate solubility of polymers in water. Coupling solvents are generally chosen that give proper flowout characteristics to the coating once applied to a substrate. They generally have moderate to slow evaporation rates and the overall solvent blend is chosen to have a range of evaporation rates that give proper film formation and drying. Coupling solvents can enhance miscibility of the compressed fluid with water-borne coating compositions. Preferably the coupling solvent has high miscibility with the compressed fluid. Preferably coupling solvents which increase the solubility of the compressed fluid in the water-borne coating compositions are used.

Examples of coupling solvents include, but are not limited to, ethylene glycol ethers; propylene glycol ethers; chemical and physical combinations thereof; lactams; cyclic ureas; and the like. Specific coupling solvents include butoxy ethanol, propoxy ethanol, hexoxy ethanol, isopropoxy 2-propanol, butoxy 2-propanol, propoxy 2-propanol, tertiary butoxy 2-propanol, ethoxy ethanol, butoxy ethoxy ethanol, propoxy ethoxy ethanol, hexoxy ethoxy ethanol, methoxy ethanol, methoxy 2-propanol, and ethoxy ethanol. Also included are lactams such as n-methyl-2-pyrrolidone, and cyclic ureas such as dimethyl ethylene urea.

The coupling agent may also comprise a coupling polymer to increase the solubility of the compressed fluid. Such polymers have solubility in water and the compressed fluid. Preferably the compressed fluid has a relatively high solubility in the coupling polymer. Preferably, the compressed fluid has a solubility in the coupling polymer of at least about 5, more preferably at least about 10, still more preferably at least about 15, and most preferably at least about 20, % by weight at the pressure for spraying. For example, carbon dioxide has the following solubilities in various polymers containing little or no organic solvent, when under a pressure of about 1600 psi (110 bars): 17 % in an acrylic polymer (no solvent), 24 % in an epoxy polymer (no solvent), 26 % in a melamine-formaldehyde polymer (2% solvent), 27 % in a urea-formaldehyde polymer (5% solvent), 36 % in an epoxidized fatty ester (no solvent), 40 % in a silicone polymer (no solvent), and 43 % in a polyester polymer (5% solvent). The coupling polymers may have substituent groups with coupling functionality for the compressed fluid.

The water-borne composition containing the at least one coupling agent for the compressed fluid has a compressed fluid solubility at the pressure of spraying of preferably at least about 2, more preferably at least about 4, still more preferably at least about 6, and most preferably at least about 8, weight %.

Where carbon dioxide is used as the compressed fluid, the pH may be controlled or regulated to avoid pH levels that cause stability problems for the water-borne coating composition such as precipitation or loss of dispersion. Preferably the pH is controlled by using a pH adjusting amount of a.pH buffer in the water-borne coating composition. One example of a buffer is a carbonate/bicarbonate buffer, which regulates the pH at about 10. The pH may also be controlled by using alkali or other basic materials such as sodium hydroxide, calcium carbonate, and other salts. Ammonia is a preferred alkali material for controlling the pH. Preferably the liquid mixture is heated when ammonia is used to decompose any carbamates.

The liquid mixture of water-borne coating composition and compressed fluid is formed in a closed system and sprayed by passing the liquid mixture under pressure through an orifice, such as in a spray tip of a spray nozzle on a spray gun.

The environment into which the water-borne coating composition is sprayed is not narrowly critical. However, the pressure therein must be sufficiently lower than the spray pressure to enable rapid gasification and expansion of the compressed fluid to occur during spray formation. Preferably, the polymeric mixture is sprayed into air under conditions at or near atmospheric pressure. Other gaseous environments can also be used. The relative humidity of the air or other gaseous environment should allow sufficient evaporation of water from the liquid spray in order to produce desirable coating formation on a substrate. Therefore excessively high relative humidity should be avoided and low relative humidity is preferred.

Although high spray pressures of 5000 psi (345 bars) and higher may be used, preferably the spray pressure is below about 3000 psi (210 bars), more preferably below about 2000 psi (140 bars). Very low pressure is generally not compatible with high compressed fluid solubility in the water-borne coating composition. Preferably the spray pressure is above about 50 % of the critical pressure of the compressed fluid, more preferably above about 75 % of the critical pressure, and most preferably above, at, or slightly below the critical pressure.

Preferably, the spray temperature of the liquid mixture is below about 150° C, more preferably below about 100° C, and most preferably below about 80° C. The temperature used will in general depend upon the stability of the water-borne coating composition. Reactive systems must generally be sprayed at lower temperatures than non-reactive systems. Preferably, the spray temperature of the liquid mixture is above about 20° C, more preferably above about 25° C, and most preferably above, at, or slightly below the critical temperature of the compressed fluid. The liquid mixture is preferably heated to a temperature that substantially compensates for the cooling effect caused by expansion of the compressed fluid during spray formation. Heating also lowers the viscosity and increases the rate at which the compressed fluid is released as a gas during depressurization, thereby increasing the expansive force available for atomization.

The liquid spray is preferably sprayed at a temperature and pressure at which the compressed fluid is a supercritical fluid.

Liquid spray droplets are produced which generally have an average diameter of one micron or greater. Preferably, the droplets have average diameters of about 5 to about 150 microns, more preferably from about 10 to about 100 microns, still more preferably from about 15 to about 70 microns, and most preferably from about 20 to about 50 microns.

The compressed fluid is preferably present in the liquid mixture in an amount which produces a decompressive spray at the given spray temperature and pressure. Preferably the liquid spray has a feathered spray pattern. Preferably the spray pattern has a width that is greater than the spray pattern obtained when the water-borne coating composition is sprayed through the orifice under pressure with no compressed fluid admixed therewith.

Unlike orgainic solvent borne coating systems, the compressed fluid may be present in the liquid mixture in an amount above the solubility limit in the water-borne coating composition so as to form a liquid mixture that contains a finely dispersed liquid compressed fluid phase. The dispersed liquid compressed fluid can improve atomization of water-borne coating compositions because it increases the expansive force of the compressed fluid without substantially affecting coating formation.

If compressed fluid used in an amount excessively above the solubility limit, larger than desirable agglomerations of the liquid compressed fluid phase can form in the liquid mixture, which become more difficult to maintain as a uniform dispersion and may disrupt the spray. Therefore, the amount of compressed fluid present in the liquid mixture is preferably less than about 30, more preferably less than about 25, and most preferably less than about 20, percentage points above the solubility limit. The amount of compressed fluid present in the liquid mixture is preferably less than about 40, more preferably less than about 35, still more preferably less than about 30, and most preferably less than about 25, weight percent. The amount of compressed fluid present in the liquid mixture should be at least an amount which renders the liquid mixture capable of being sprayed. The amount required will depend upon the viscosity and rheological properties of the water-borne coating composition. In general, higher viscosity will require a higher level of compressed fluid. The liquid mixture preferably contains at least about 4, more preferably at least about 6, still more preferably at least about 10 and most preferably at least about 15, weight percent compressed fluid. Preferably the liquid mixture contains sufficient compressed fluid to produce a decompressive spray, more preferably a decompressive spray with fine atomization. Preferably the liquid spray has a feathered spray pattern. Preferably the spray has a width that is greater than the spray pattern obtained when the water-borne coating composition is sprayed through the orifice under pressure with no compressed fluid admixed therewith.

The liquid compressed fluid phase is preferably finely dispersed into the liquid mixture by vigorously agitating or mixing the liquid mixture as the compressed fluid is admixed with the water-borne coating composition. How the materials are admixed is not critical to the practice of the present invention, provided that the liquid compressed fluid phase becomes substantially finely dispersed in the liquid mixture. Static or powered mixers may be used or mixing may be provided by the churning and shearing actions caused by passing the liquid mixture through a pump, check valve, and the like. To maintain the liquid compressed fluid phase finely dispersed in the liquid mixture, the liquid mixture is preferably periodically or continually agitated or mixed until it is sprayed. Periodic mixing can be provided by circulating the liquid mixture in a loop that contains the spray gun, a mixing device, and a circulating pump.

Forming and maintaining the finely dispersed liquid compressed fluid phase in the liquid mixture may be aided by using a dispersion, emulsifying, or stabilization agent for the compressed fluid in the practice of the present invention. Such agents are frequently surfactants, such as TERGITOL™ nonionic surfactant NP-10 available from Union Carbide Corporation, that are used to produce more or less stable mixtures of immiscible liquids such as hydrocarbons in water (Martens, Charles R, Water-Borne Coatings, Van Nostrand Reinhold, New York, 1981). Surfactant materials are commonly used in water-borne coating compositions that contain dispersed polymers. Surfactants may also aid in forming and maintaining a dispersion of the liquid compressed fluid phase, which typically has properties similar to a hydrocarbon material. As much as 5 % or more based on the vehicle solid weight may be required.

In order for the compressed fluid to form a liquid compressed fluid phase at temperatures and pressures at which it is a supercritical fluid, the water-borne coating composition preferably contains at least one organic solvent that is capable of being extracted from said water-borne coating composition into the compressed fluid phase. The organic solvent should be at least partially miscible with the compressed fluid, preferably highly miscible.

Alternatively, a relatively small amount of organic solvent that is substantially insoluble in the water-borne coating composition may be added to the liquid mixture to enable the compressed fluid to form a liquid compressed fluid phase at supercritical conditions. This is particularly desirable where the water-borne coating composition does not contain an extractable organic solvent or contains an insufficient amount of such solvent and where the water-borne coating compositions contain water-dispersible polymers. Such insoluble organic solvents are typically hydrocarbon solvents such as pentane, hexane, heptane, octane, decane, toluene, xylene, and the like, including branched and aromatic hydrocarbons, but other insoluble solvents may also be used. The insoluble solvents preferably have a relatively high relative evaporation rate, preferably above about 100 (butyl acetate RER =100), such as pentane, hexane, and heptane, toluene, and the like, so that the solvent readily evaporates during spraying. The insoluble organic solvent must be at least partially miscible with the compressed fluid, preferably highly miscible with the compressed fluid when under pressure. The insoluble organic solvent should be used in a minimal amount that gives a sufficient amount of liquid compressed fluid phase for spraying, so as to minimize organic solvent emissions. Generally the amount of insoluble organic solvent will be between about 2 % and about 25 % of the total weight of water-borne coating composition and insoluble organic solvent, preferably between about 4 % and about 20 %, and more preferably between about 5 and about 15 %, by weight. If an insoluble organic solvent is utilized, it is preferably premixed with the water-borne coating composition so as to form a substantially finely dispersed insoluble organic solvent phase therein before admixing the water-borne coating composition with the compressed fluid.

Advantageously an elongated orifice passageway is used to spray the liquid mixture. The elongated orifice passageway is preferably elongated in at least an amount such that when the liquid mixture is sprayed through the elongated orifice passageway, a decompressive spray is produced. The elongated orifice passageway increases the time available for nucleation to a gaseous compressed fluid phase to occur relatively uniformly within the liquid mixture as it depressurizes in the orifice passageway.

The elongated orifice passageway is preferably sufficiently long relative to the equivalent diameter to effectively produce the decompressive spray, but it must not be so excessively long that the expansive force provided by the compressed fluid is severely depleted before the spray is discharged from the orifice. Preferably, the ratio of length to diameter is greater than about 2 and less than about 20, more preferably greater than about 3 and less than about 15, most preferably greater than about 4 and less than about 10. The length of the orifice passageway should desirably be in the range of from about 0.5 mm to about 1 cm, and more preferably from about 1 mm to about 7.5 mm. This is in contrast to the conventional length of the prior art orifice passageways which typically are in the range of from about 0.05 mm to about 0.5mm.

The orifice sizes suitable for the practice of the present invention generally range from about 0.01 to about 0.75, preferably about 0.018 to 0.63, most preferably 0.025 to 0.1, mm diameter, although larger and smaller orifices may be used. Because the orifices are generally not circular in cross-section, the diameters referred to are equivalent to a circular diameter. The proper selection is determined by the orifice size that will supply the desired coating spray rate and accomplish proper atomization for the coating. Spray tips, spray nozzles, and spray guns used for conventional and electrostatic airless and air-assisted airless spraying of water-borne coating formulations such as paints, lacquers, enamels, and varnishes are suitable for spraying the liquid mixtures of the present invention. Spray guns, nozzles, and tips are preferred 1) that do not have excessive flow volume between the orifice and the valve that turns the spray on and off and 2) that do not obstruct the wide angle at which the spray typically exits the spray orifice. The most preferred spray tips and spray guns are the UNICARB™ spray tips and spray guns manufactured by Nordson Corporation. Devices and flow designs, such as pre-orifices or turbulence promoters, that promote turbulent or agitated flow in the liquid mixture prior to passing the mixture through the orifice may also be used. The pre-orifice preferably does not create an excessively large pressure drop in the flow of liquid mixture.

The liquid mixture of water-borne coating composition and compressed fluid may be prepared for spraying by any suitable apparatus. The spray apparatus may also be a UNICARB™ System Supply Unit manufactured by Nordson Corporation to proportion, mix, heat, and pressurize coating compositions with compressed fluids such as carbon dioxide for the spray application of coatings.

While preferred forms of the present invention have been described, it should be apparent to those skilled in the art that methods and apparatus may be employed that are different from those shown without departing from the spirit and scope thereof.

### EXAMPLE 1

A water-borne coating composition that gives a polyethylene glycol coating was prepared from Union Carbide CARBOWAX™ Polyethylene Glycol 8000, which is a water-soluble solid polyethylene glycol polymer that has an average molecular weight of about 8000. The polymer was dissolved in water and methyl ethyl ketone coupling solvent was added to give the following composition by weight: 45% polymer, 45% water, and 10% methyl ethyl ketone. The viscosity was about 235 centipoise at 22° C.

The water-borne coating composition was sprayed using carbon dioxide as the compressed fluid using the proportioning and spraying apparatus disclosed in Figure 2 of U.S. Patent No. 5,105,843. Carbon dioxide, supplied from a cylinder, was pressurized by a pump and regulated to the desired spray pressure by a pressure regulator. A mass flow meter measured the mass flow of carbon dioxide fed through a check valve to the mix point with the water-borne coating composition. The water-borne coating composition was supplied from a tank, pre-pressurized by a supply pump, and pressurized and metered by a precision gear pump. A gear meter measured the amount delivered through a check valve to the mix point with the carbon dioxide. The speed command of the gear pump was electronically controlled by an input signal from the mass flow meter by using a control system to automatically obtain the desired proportion of water-borne coating composition and carbon dioxide. The metering rate was electronically adjusted by a feedback signal from the gear meter to correct for pumping inefficiency. The liquid mixture of water-borne coating composition and carbon dioxide from the mix point was further mixed in a static mixer and admixed with recycled liquid mixture in a circulation loop. The circulation loop contained another static mixer, a flow-through piston-type accumulator, a heater, a filter, a high-pressure sight glass, a spray gun, a circulation pump, and a second heater. The spray gun was a Nordson UNICARB™ SCF automatic airless spray gun with a Nordson UNICARB™ SCF spray tip #123007 with UNICARB™ SCF pre-orifice #138344. The spray tip had a 9-mil (0.23mm) orifice size and a 10-inch (25.4 cm) fan width rating.

The circulation loop was filled with liquid mixture containing about 5 % carbon dioxide by weight and continually circulated. The sight glass showed a relatively small amount of finely dispersed liquid carbon dioxide phase in the liquid mixture, which showed that the solubility was less than 5 %. The carbon dioxide level was then increased to about 8 % and sprayed at 24° C and 900 psi (62 bars). This produced an angular liquid-film spray having a visible liquid film and a fishtail spray pattern. The temperature and pressure were then increased to 43° C and 1300 psi (90 bars) at the same carbon dioxide level and this also produced an angular liquid-film spray having a visible liquid film and a fishtail spray pattern having strong side jets. The pressure was further increased to 1550 psi (107 bars), which still produced a liquid-film spray. The carbon dioxide level in the liquid mixture was then continuously increased while spraying, which caused the spray to transition from a liquid-film spray to a parabolic decompressive spray having a feathered spray pattern and a greater fan width at the higher carbon dioxide level. The liquid carbon dioxide phase continued to remain finely and uniformly dispersed in the liquid mixture. At 43° C and 1550 psi (107 bars), the decompressive spray had a narrow droplet size distribution having an average droplet size of 43.7 microns (Sauter Mean Diameter) and a span of 1.2, as measured using a Malvern™ type 2600 spray and droplet sizer. At constant carbon dioxide level and pressure, the spray temperature was increased to 50° C, which produced a decompressive spray having a smaller average droplet size of 36.2 microns. The spray temperature was then further increased to 60° C, which produced a decompressive spray having a still smaller average droplet size of 30.8 microns and a narrow span (distribution width) of 1.2. The liquid carbon dioxide phase continued to be finely and uniformly dispersed in the liquid mixture, which produced a steady uniform feathered spray pattern. A wood test panel, 12-inch (30 cm) by 12-inch (30 cm) in size, was then sprayed with the decompressive spray, which applied a very uniform coating having no sags or runs, due to the fine atomization and higher viscosity at which the coating was deposited because of the reduced water content with which it was sprayed. The carbon dioxide level in the liquid mixture was then further increased, which gave decompressive sprays having asymptotically smaller average droplet sizes of 26 microns and then 25 microns. The decompressive spray produced using no pre-orifice were substantially the same as those with the pre-orifice. Finally, at a high carbon dioxide level estimated to be between about 30 and 35 % in the liquid mixture, the liquid carbon dioxide phase began to agglomerate and no longer remained finely dispersed, which caused the spray to begin to pulsate and to no longer be steady.

For comparison, a composition having 50% Polyethylene Glycol 8000 and 50% water by weight, but with no methyl ethyl ketone, was mixed with carbon dioxide in a high pressure cell at supercritical fluid conditions of 50° C and 1600 psi (110 bars). The carbon dioxide phase was a supercritical gas and not a liquid. This demonstrated that the methyl ethyl ketone was extracted from the water-borne coating, composition by the carbon dioxide phase sufficiently to enable the carbon dioxide to form a liquid phase at the supercritical temperatures and pressures, even at very high levels of carbon dioxide. However, this did not adversely affect the coating.

For another comparison, the water-borne coating composition was sprayed by a conventional airless spray, with no carbon dioxide, but by using the same spray gun, spray tip, and pre-orifice and the same spray conditions of 50° and 60° C and about 1550 psi (107 bars). This produced angular liquid-film sprays having visible liquid films, very poor atomization, and a fishtail spray pattern having strong side jets. The fishtail sprays produced very nonuniform coatings on the wood test panels and the coatings were very poor, because the poor atomization produced many runs and sags.

For another comparison, the water-borne coating composition was sprayed using an air spray gun. This produced very poor uneven coatings with runs and sags due to very poor atomization. The water-borne coating composition was then diluted with water to a typical air spray viscosity of 78 centipoise at 23° C, which reduced the polymer level to 35.5% and increased the water content to 56.6%. The diluted composition was then sprayed with an air spray gun, which produced fine atomization but a broad droplet size distribution having a large span of 1.85. However, despite the fine atomization and a feathered spray, poor coatings were applied that were non-uniform, because the coatings were much wetter and less viscous due to the higher water content, which caused runs and sags even in relatively thinly applied coatings.

### EXAMPLE 2

The water-borne coating composition was Joncryl™ 540, which is a water-borne emulsion polymer system manufactured by S. C. Johnson Wax containing 44 weight % water-dispersible solid acrylic polymer in water and having a viscosity of 500 centipoise at 25°C. The composition is water-reducible to obtain a low spray viscosity, but the composition was sprayed with no water dilution, and therefore had a reduced water content and high viscosity. The polymer dispersion is amine stabilized by converting a portion of the polymer is to a dimethylethanol amine salt. The dispersion has a stable pH of about 8.5 and is sensitive to the pH being lowered to acidic levels. Carbon dioxide was found to be incompatible with the dispersion, without neutralization or buffering. Ethane was compatible with the composition because ethane did not affect the pH.

Because the water-borne coating composition contained no coupling agent for ethane and no extractable solvent, hexane was dispersed into the water-borne coating composition to give a mixture containing 10 % hexane by weight. Hexane is insoluble in the water-borne coating composition but it is highly miscible with ethane when under pressure, thereby enabling the ethane to form a liquid phase at supercritical temperature and pressure, when above the bubble point pressure of the mixture. It has a high relative evaporation rate of about 1150.

The mixture of water-borne coating composition and hexane was sprayed in a batch mode by using the same spray apparatus, spray gun, and spray tip as in Example 1. The circulation loop was filled with a liquid mixture of the water-borne coating composition, hexane, and 6 % ethane by weight at 1600 psi (110 bars) and 50° C. The liquid mixture was continually circulated and contained a finely dispersed liquid ethane phase at the supercritical temperature and pressure. This produced an angular liquid-film spray having a visible liquid film. Increasing the temperature to 55° C and the ethane level to 8 weight % gave an angular liquid film spray having no visible liquid film, which indicated that the spray was close to the transition to a decompressive spray. Increasing the ethane level to 10 weight % gave a finely dispersed liquid ethane phase which produced a parabolic decompressive spray that was still close to the transition from a liquid-film spray. Increasing the ethane level to 16 weight % gave a uniform feathered decompressive spray having finer droplet size, both with and without the pre-orifice. Increasing the spray temperature to 60° C and the ethane level to a higher level of 20 weight % continued to give a finely dispersed liquid ethane phase in the liquid mixture, which produced a feathered decompressive spray having an average droplet size of 56 microns. The water-borne coating composition was then sprayed onto a wood test panel, which deposited the material very uniformly and with a high viscosity by virtue of the reduced water content that prevents runs and sags.

For comparison, the water-borne coating composition was diluted with water to an air spray viscosity of 72 centipoise at 23° C. The diluted water-borne coating composition was sprayed by using an air spray gun, which produced poor coatings despite fine atomization because the very wet coating had low viscosity, which caused the wet coating to run and sag before it air dried to a hard coating.

## Claims

1. A process for spraying a water-borne polymeric composition having a reduced water content, which comprises:
(1) forming a liquid mixture in a closed system comprising:
(a) a water-borne polymeric composition containing a solvent fraction having at least about 35% water by weight and containing at least one coupling agent for the compressed fluid; and
(b) at least one compressed fluid which is compatible with or can be made compatible with said water-borne polymeric composition and which is at least in an amount which renders said liquid mixture capable of being sprayed, wherein the compressed fluid is a gas at standard conditions of 0°C and one atmosphere pressure (STP); and
(2) spraying said liquid mixture by passing the mixture under pressure through an orifice to form a liquid spray, which comprises a decompressive spray or a transition spray.

2. The process of claim 1, wherein said water-borne polymeric composition is a water-borne coating composition that contains at least one polymer capable of forming a coating on a substrate.

3. The process of claim 2, wherein said at least one polymer is a water-dispersible polymer or a water-soluble polymer.

4. The process of claim 1, wherein said at least one coupling agent for said compressed fluid comprises a coupling solvent or a coupling polymer.

5. The process of claim 1, wherein said at least one compressed fluid is selected from the group consisting of carbon dioxide, nitrous oxide, ethane, ethylene, propane, propylene, butane, and isobutane.

6. The process of claim 5, wherein the compressed fluid is carbon dioxide and the pH of said liquid mixture is controlled to prevent polymer precipitation when admixing said carbon dioxide with said water-borne polymeric composition.

7. The method of claim 1, wherein said liquid spray comprises a decompressive spray.

8. The process of claim 1, wherein said liquid mixture contains a finely dispersed liquid compressed fluid phase.

9. The process of claim 8, wherein said water-borne polymeric composition contains at least one organic solvent that is capable of being extracted from said water-borne polymeric composition into the compressed fluid phase.

10. The method of claim 1, wherein the ratio of the length of said orifice to its equivalent diameter is in the range of from about 2 to about 20.

11. The process of claim 1 wherein said at least one compressed fluid is a supercritical fluid at the temperature and pressure at which said liquid mixture is sprayed and said water-borne polymeric composition contains at least one organic solvent that is capable of being extracted from said water-borne polymeric composition into the compressed fluid, thereby enabling said compressed fluid to form the liquid compressed fluid phase at the supercritical temperature and pressure.

12. The process of claim 1, wherein said liquid mixture contains at least one organic solvent (c) which is immiscible with said water-borne polymeric composition that is at least partially miscible with said at least one compressed fluid under pressure.

## Patentansprüche

1. Verfahren zum Sprühen einer wäßrigen polymeren Zusammensetzung mit einem verringerten Wassergehalt, welches umfaßt:
(1) Bilden einer flüssigen Mischung in einem geschlossenen System, umfassend:
(a) eine wäßrige polymere Zusammensetzung, die eine Lösungsmittelfraktion mit mindestens etwa 35 Gew.-% Wasser enthält und mindestens ein Kupplungsmittel für das komprimierte Fluid enthält; und
(b) mindestens ein komprimiertes Fluid, welches mit der wäßrigen polymeren Zusammensetzung kompatibel ist oder kompatibel gemacht werden kann und mindestens in einer Menge vorhanden ist, welche die flüssige Mischung sprühbar macht, worin das komprimierte Fluid unter Standardbedingungen von 0°C und einem Druck von 1 atm (STP) ein Gas ist; und
(2) Sprühen der flüssigen Mischung durch Hindurchleiten der Mischung unter Druck durch eine Düse, um einen flüssigen Sprühnebel zu bilden, welcher einen dekomprimierten Sprühnebel oder einen Übergangs-Sprühnebel umfaßt.

2. Verfahren nach Anspruch 1, worin die wäßrige polymere Zusammensetzung eine wäßrige Beschichtungszusammensetzung ist, die mindestens ein Polymer enthält, welches in der Lage ist, eine Beschichtung auf einem Substrat zu bilden.

3. Verfahren nach Anspruch 2, worin das mindestens eine Polymer ein in Wasser dispergierbares Polymer oder ein in Wasser lösliches Polymer ist.

4. Verfahren nach Anspruch 1, worin das mindestens eine Kupplungsmittel für das komprimierte Fluid ein Kupplungs-Lösungsmittel oder ein Kupplungs-Polymer umfaßt.

5. Verfahren nach Anspruch 1, worin das mindestens eine komprimierte Fluid ausgewählt ist aus der Gruppe bestehend aus Kohlendioxid, Distickstoffoxid, Ethan, Ethylen, Propan, Propylen, Butan und Isobutan.

6. Verfahren nach Anspruch 5, worin das komprimierte Fluid Kohlendioxid ist und der pH der flüssigen Mischung überwacht wird, um eine Polymerfällung beim Mischen des Kohlendioxids mit der wäßrigen polymeren Zusammensetzung zu verhindern.

7. Verfahren nach Anspruch 1, worin der flüssige Sprühnebel einen dekomprimierten Sprühnebel umfaßt.

8. Verfahren nach Anspruch 1, worin die flüssige Mischung eine fein dispergierte flüssige komprimierte Fluidphase umfaßt.

9. Verfahren nach Anspruch 8, worin die wäßrige polymere Zusammensetzung mindestens ein organisches Lösungsmittel enthält, das aus der wäßrigen polymeren Zusammensetzung in die komprimierte Fluidphase hinein extrahiert werden kann.

10. Verfahren nach Anspruch 1, worin das Verhältnis der Länge der Düse zu ihrem äquivalenten Durchmesser im Bereich von etwa 2 bis etwa 20 liegt.

11. Verfahren nach Anspruch 1, worin das mindestens eine komprimierte Fluid bei einer Temperatur und einem Druck, bei denen die flüssige Mischung gesprüht wird, ein überkritisches Fluid ist und die wäßrige polymere Zusammensetzung mindestens ein organisches Lösungsmittel enthält, welches aus der wäßrigen polymeren Zusammensetzung in das komprimierte Fluid hinein extrahiert werden kann, wodurch es das komprimierte Fluid befähigt, die flüssige komprimierte Fluidphase bei der überkritischen Temperatur und dem überkritischen Druck zu bilden.

12. Verfahren nach Anspruch 1, worin die flüssige Mischung mindestens ein organisches Lösungsmittel (c) enthält, welches mit der wäßrigen polymeren Zusammensetzung, welche zumindest teilweise mit dem mindestens einen komprimierten Fluid unter Druck mischbar ist, nicht mischbar ist.

## Revendications

1. Procédé pour la pulvérisation d'une composition polymère aqueuse ayant une teneur réduite en eau, qui comprend les étapes consistant :
(1) à former un mélange liquide dans un système clos, comprenant :
(a) une composition polymère aqueuse contenant une fraction de solvant renfermant au moins environ 35 % en poids d'eau et contenant au moins un agent de couplage pour le fluide comprimé ; et
(b) au moins un fluide comprimé qui est compatible ou qui peut être rendu compatible avec ladite composition polymère aqueuse et qui est présent au moins en une quantité qui rend ledit mélange liquide apte à la pulvérisation, ledit fluide comprimé étant un gaz dans les conditions normales de température de 0°C et de pression d'une atmosphère (TPN) ; et
(2) à pulvériser ledit mélange liquide en faisant passer le mélange sous pression à travers un orifice pour former un jet liquide pulvérisé, qui comprend un jet pulvérisé de décompression ou jet pulvérisé de transition.

2. Procédé suivant la revendication 1, dans lequel la composition polymère aqueuse est une composition aqueuse de revêtement qui contient au moins un polymère capable de former un revêtement sur un substrat.

3. Procédé suivant la revendication 2, dans lequel ledit au moins un polymère est un polymère dispersable dans l'eau ou un polymère soluble dans l'eau.

4. Procédé suivant la revendication 1, dans lequel ledit au moins un agent de couplage pour le fluide comprimé comprend un solvant de couplage ou un polymère de couplage.

5. Procédé suivant la revendication 1, dans lequel ledit au moins un fluide comprimé est choisi dans le groupe consistant en ledit dioxyde de carbone, l'oxyde nitreux, l'éthane, l'éthylène, le propane, le propylène, le butane et l'isobutane.

6. Procédé suivant la revendication 5, dans lequel le fluide comprimé consiste en dioxyde de carbone et le pH du mélange liquide est ajusté pour éviter la précipitation du polymère lors du mélange dudit dioxyde de carbone à la composition polymère aqueuse.

7. Procédé suivant la revendication 1, dans lequel le jet liquide pulvérisé comprend un jet pulvérisé de décompression.

8. Procédé suivant la revendication 1, dans lequel le mélange liquide contient une phase fluide comprimée liquide finement dispersée.

9. Procédé suivant la revendication 8, dans lequel la composition polymère aqueuse contient au moins un solvant organique qui peut être extrait de ladite composition polymère aqueuse et passé dans la phase fluide comprimée.

10. Procédé suivant la revendication 1, dans lequel le rapport de la longueur de l'orifice à son diamètre équivalent est compris dans l'intervalle d'environ 2 à environ 20.

11. Procédé suivant la revendication 1, dans lequel ledit au moins un fluide comprimé est un fluide surcritique à la température et à la pression auxquelles le mélange liquide est pulvérisé et la composition polymère aqueuse contient au moins un solvant organique qui peut être extrait de ladite composition polymère aqueuse et passé dans le fluide comprimé, ce qui permet audit fluide comprimé de former la phase fluide comprimée liquide à la température et la pression surcritiques.

12. Procédé suivant la revendication 1, dans lequel le mélange liquide contient au moins un solvant organique (c) qui est non miscible à la composition polymère aqueuse, qui est au moins partiellement miscible avec ledit au moins un fluide comprimé, sous pression.
